# EUROPÄISCHE PATENTANMELDUNG

(11) **EP 4 346 083 A1**
(43) Veröffentlichungstag der Anmeldung: **03.04.2024**
(21) Anmeldenummer: 22199124.3
(22) Anmeldetag: 30.09.2022
(51) Int. Cl.: H02P 1/50, H02P 25/03

(54) **SYNCHRONMASCHINE UND VERFAHREN ZUM BETRIEB EINER SYNCHRONMASCHINE**

(71) Anmelder: Siemens Aktiengesellschaft, 80333 München (DE)
(72) Erfinder: Centner, Matthias, 10555 Berlin (DE); Getschmann, Thorsten, 14612 Falkensee (DE)
(74) Vertreter: Siemens Patent Attorneys

(57) **Zusammenfassung**

Eine Synchronmaschine (1) weist einen Stator (3) und einen Rotor auf, wobei der Rotor eine Rotorwicklung (5) aufweist, wobei ein erster Leistungshalbleiter (6) zum Kurzschluss der Rotorwicklung (5) vorgesehen ist, wobei der erste Leistungshalbleiter (6) und die Rotorwicklung eine erste Masche (8) ausbilden. Bei einem Verfahren zum Betrieb einer Synchronmaschine (1), wird die Rotorwicklung (5) in einem Betriebszustand der Synchronmaschine (1) kurzgeschlossen, wobei zum Kurzschließen ein erster Kurzschließer (6) verwendet wird, wobei der Kurzschließer (6) und die Rotorwicklung (5) eine erste Masche (8) ausbilden.

## Beschreibung

Die Erfindung betrifft eine Synchronmaschine und ein Verfahren zum Betrieb einer Synchronmaschine.

Um das Drehmoment während des asynchronen Anlaufs von elektrisch erregten Synchronmaschinen zu erhöhen, wird ein Zusatzwiderstand im Rotorstromkreis der Maschine angeordnet. Dieser entfaltet seine größte Wirkung bzgl. des Drehmoments erst bei relativ großen Drehzahlen, wird aber während des gesamten Hochlaufs vom Rotorwicklungswechselstrom durchflossen und ist deshalb großer Verlustleistung ausgesetzt. Entsprechend muss der Widerstand bzgl. seiner thermischen Kapazität dimensioniert werden. Eine derartige Synchronmaschine, welche elektrisch erregt ist, kann auch als fremderregte Synchronmaschine bezeichnet werden. Die Erfindung betrifft auch eine Vorrichtung zum Zuschalten des Rotor-Zusatzwiderstands bei einer elektrisch erregten Synchronmaschine mit asynchronem Anlauf.

Eine Synchronmaschine ist z.B. als ein Schenkelpol-Synchronmotor ausgeführt, welcher einen mit massiven Polen insbesondere ohne Anlaufkäfig ausgeführten Rotor aufweist, wobei diesem Rotor eine schleifringlose Erregermaschine aus einem Stator und einem innerhalb des Stators angeordneten Rotor und einer der Rotorwicklung zugeordneten Gleichrichteranordnung aufweist und der Gleichrichteranordnung elektrisch ein Widerstand, z.B. zur Verringerung eines Pendelmomentes und Erhöhung des Drehmomentes in der Anlaufphase des Synchronmotors, zugeordnet ist. Bei schleifringlos oder auch "bürstenlos" erregten Synchronmotoren, deren Rotor ohne Anlaufkäfig ausgeführt ist, ist es für die Phase des asynchronen Anlaufs üblich, die Feldwicklung über einen äußeren ohmschen Widerstand von ca. dem lOfachen Feldwiderstand kurzzuschließen. Um auch bei erschwerten Anlaufbedingungen eine sicher arbeitende bürstenlose Erregung zu verwirklichen, ist es auch möglich, beim Anlaufvorgang den Gleichrichter entweder kurzzuschließen oder vom Feld zu trennen, wobei das Feld auf einen ohmschen Widerstand (Anlaufwiderstand) geschaltet ist. Durch zusätzliche Maßnahmen kann dieser Widerstand während des synchronen Betriebes abgeschaltet werden.

Die elektrisch erregte Synchronmaschine hat einen Rotor mit einer Wicklung. Weist der Rotor einen Anlaufwiderstand auf, ist es vorteilhaft, wenn es gelingt, den Widerstand erst ab Erreichen einer gewissen Drehzahl zuzuschalten, dann besteht hinsichtlich seiner Wirkung kein Nachteil, aber ein Vorteil durch den wesentlich geringeren Verlusteintrag. Damit kann der Widerstand kleiner dimensioniert werden, bzw. mit vorhandenen Widerständen, bzw. einem vorhandenen Widerstand können schwerere Anläufe durchgeführt werden. Schwer heißt in diesem Zusammenhang insbesondere auch Anläufe mit hohem Trägheits- und Gegenmoment. Der Widerstand kann mit einem oder einer Vielzahl von Widerstandselementen ausgeführt sein.

Aus der US 9018888 B2 ist eine Synchronmaschine bekannt, bei welcher der Widerstand direkt gerückt wird.

Wenn es keine Möglichkeit der Zuschaltung des Widerstandes gibt, wird der Widerstand während des Anlaufs dauerhaft im Rotorkreis betrieben und erst im synchronisierten Betrieb der Maschine gebrückt. Diese Brückung erfolgt allerdings nur für eine Stromrichtung, da im synchronisierten Betrieb der Maschine im Rotor ein Gleichstrom fließt, im Gegensatz zum Anlauf, wo in der Rotorwicklung von der induzierten Spannung ein Wechselstrom getrieben wird. Auch eine Schaltung, die einen dauerhaften Betrieb mit Zusatzwiderstand vorsieht, ist möglich, jedoch nachteilig.

Eine Aufgabe der Erfindung ist es eine verbesserte Synchronmaschine zu gestalten.

Eine Lösung der Aufgabe ergibt sich nach den Ansprüchen 1 und 6. Weitere beispielhafte Ausgestaltungen ergeben sich nach den davon abhängigen Ansprüchen 2 bis 5 bzw. 7 bis 9.

Eine Synchronmaschine weist einen Stator und einen Rotor auf, wobei der Rotor eine Rotorwicklung aufweist, wobei ein erster Leistungshalbleiter zum Kurzschluss der Rotorwicklung vorgesehen ist, wobei der erste Leistungshalbleiter und die Rotorwicklung eine erste Masche ausbilden. Eine Masche kann als ein über Zweige geschlossener Umlauf bezeichnet werden. Durch den ersten Leistungshalbleiter kann also die Rotorwicklung kurzgeschlossen werden. Es ergibt sich eine Kurzschlussschaltung. Der erste Leistungshalbleiter ist ein erster Kurzschließer über der Rotorwicklung. Die Masche ist insbesondere frei von einem Anlaufwiderstand der Synchronmaschine. Der erste Leistungshalbleiter ist zumindest ein Teil einer Vorrichtung zum Zuschalten bzw. Wegschalten eines Anlaufwiderstandes, d.h. eines Rotor-Zusatzwiderstands, bei einer elektrisch erregten Synchronmaschine mit asynchronem Anlauf. Die Synchronmaschine weist eine Erregermaschine für die Rotorwicklung auf.

In einer Ausgestaltung der Synchronmaschine ist ein zweiter Leistungshalbleiter zum Kurzschluss der Rotorwicklung vorgesehen, wobei der zweite Leistungshalbleiter parallel zum ersten Leistungshalbleiter verschalten ist. So kann in einer weiteren Stromrichtung die Rotorwicklung kurzgeschlossen werden.

In einer Ausgestaltung der Synchronmaschine sind die Leistungshalbleiter zum Kurzschluss der Rotorwicklung für unterschiedliche Stromrichtungen in der Rotorwicklung vorgesehen. Hierzu ergeben sich insbesondere Maschen für einen Kurzschlusskreis, welche den Anlaufwiderstand nicht aufweisen, also frei von diesem sind.

In einer Ausgestaltung der Synchronmaschine ist zumindest einer der Leistungshalbleiter ansteuerbar. Hierfür ist eine Ansteuerung vorgesehen. Diese Ansteuerung für die Kurzschließung ermöglicht einen beeinflussbaren Kurzschluss der Rotorwicklung.

In einer Ausgestaltung der Synchronmaschine sind der zumindest eine erste Leistungshalbleiter und die Rotorwicklung parallel verschalten, wobei dazu ein Anlaufwiderstand seriell verschalten ist. Es gibt also eine weitere Masche, in welcher insbesondere die antiparallel geschaltenen Leistungshalbleiter, der erste Leistungshalbleiter antiparallel zum zweiten Leistungshalbleiter, seriell mit dem Widerstand, insbesondere dem Anlaufwiderstand, verschalten sind.

In einem Verfahren zum Betrieb einer Synchronmaschine, wobei die zu betreibende Synchronmaschine einen Stator und einen Rotor aufweist, wobei der Rotor eine Rotorwicklung aufweist, wird die Rotorwicklung in einem Betriebszustand der Synchronmaschine kurzgeschlossen, wobei zum Kurzschließen ein erster Kurzschließer verwendet wird, wobei der Kurzschließer und die Rotorwicklung eine erste Masche ausbilden. Der erste Kurzschließer weist insbesondere den ersten Leistungshalbleiter auf. Antiparallel zum ersten Kurzschließer ist insbesondere ein zweiter Kurzschließer geschalten, welcher den zweiten Leistungshalbleiter aufweist.

In einer Ausgestaltung des Verfahrens betrifft der Betriebszustand einen Hochlauf und/oder Anlauf der Synchronmaschine. Dies kann einen positiven Effekt auf die Momentenbildung haben.

In einer Ausgestaltung des Verfahrens wird ein Anlaufwiderstand mit einem dazu parallel verschaltenen zweiten Kurzschließer seriell zur Parallelschaltung von erstem Kurzschließer und Rotorwicklung verschalten. Dies ist eine einfache und kompakte Möglichkeit das Verhalten der Synchronmaschine zu beeinflussen.

In einer Ausgestaltung des Verfahrens wird eine Synchronmaschine in einer der beschriebenen Ausgestaltungen verwendet.

Die Merkmale der einzelnen beanspruchten bzw. beschriebenen Gegenstände sind ohne Weiteres miteinander kombinierbar. Im Folgenden wird die Erfindung beispielhaft anhand von Figuren näher dargestellt und erläutert. Die in den Figuren gezeigten Merkmale können fachmännisch zu neuen Ausführungsformen kombiniert werden, ohne die Erfindung zu verlassen. Es zeigen
- FIG 1: eine erste Schaltung für eine Synchronmaschine,
- FIG 2: eine zweite Schaltung für eine Synchronmaschine,
- FIG 3: eine dritte Schaltung für eine Synchronmaschine und
- FIG 4: eine vierte Schaltung für eine Synchronmaschine.

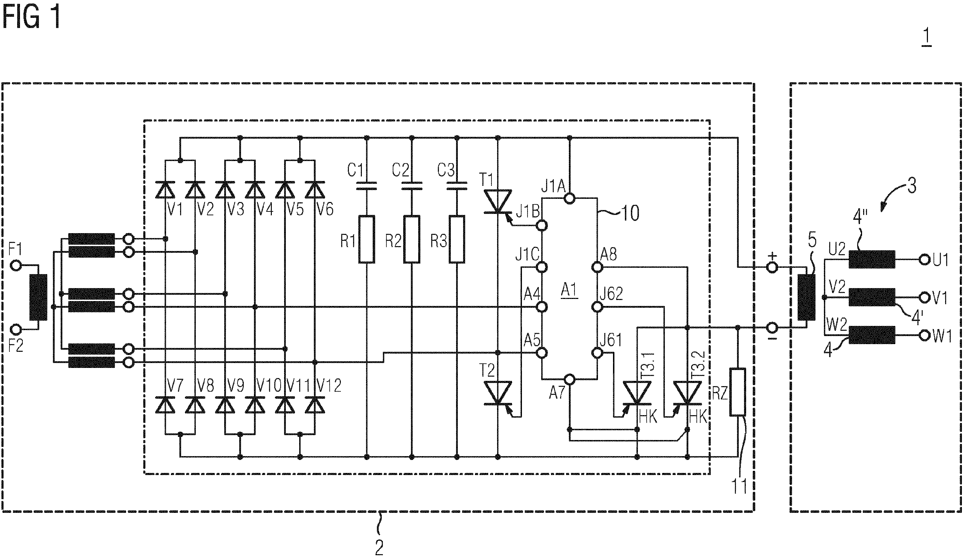

Die Darstellung nach Figur 1 zeigt eine erste Schaltung für eine Synchronmaschine 1. Die Synchronmaschine 1 weist einen Stator 3 mit Statorwicklungen 4, 4', 4", einen Rotor mit einer Rotorwicklung 5 und einen Erregerkreis 2 auf. Der Erregerkreis weist einen Widerstand 11, insbesondere einen Anlaufwiderstand, auf. Über eine Ansteuerung 10 für die Erregung wird der Erregerkreis betrieben. Der Widerstand kann auch als Zusatzwiderstand bezeichnet werden. Die Rotorwicklung weist für sich selbst auch schon einen Widerstandswert auf. Der im Erregerkreis verwendete zusätzliche Widerstand 11 beeinflusst das Verhalten der Synchronmaschine beispielsweise bei deren Anlauf bzw. Hochlauf. Um das Verhalten der Synchronmaschine zu verbessern kann die Schaltung ergänzt werden. Der prinzipielle Aufbau der Schaltung im Rotorkreis ist nicht groß zu verändern. Dies hat den Vorteil, dass vorhandene bewährte Komponenten weiterverwendet werden können. Dies ist insbesondere auch dafür wichtig, dass es Maschinen ohne Zusatzwiderstand gibt bzw. Nachbauten die alte Technik verwenden.

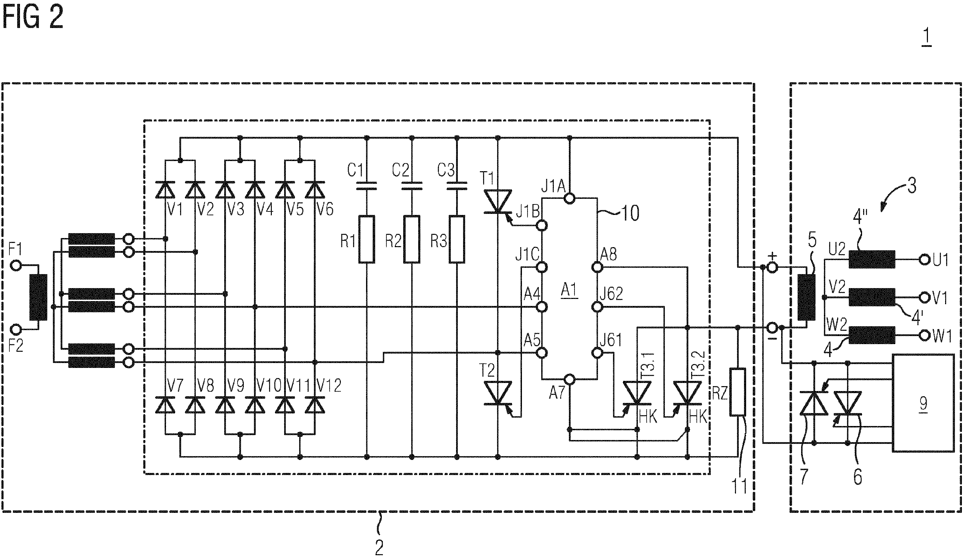

Die Darstellung nach Figur 2 zeigt eine Ergänzung zu Figur 1. Es ist eine ergänzte Schaltung zum drehzahlabhängigen Zuschalten des Zusatzwiderstandes (RZ) 5 mit Thyristoren 6 und 7 sowie einer Ansteuerlogik und einem Ansteuerleistungsteil. Die Ergänzung beruht darauf, dass parallel zur Rotorwicklung 5 ein bidirektionaler Schalter bzw. praktisch zwei antiparallel geschaltete leistungselektronische unidirektionale Schalter 6 und 7 angeordnet werden. Dies sind also ein erster Leistungshalbleiter 6 und ein zweiter Leistungshalbleiter 7. Zum Schalten dieser Schalter ist eine Ansteuerung 9 vorgesehen. Die Leistungshalbleiter 6 und 7 werden in der Anfangsphase des Anlaufs aktiviert. Im weiteren Beispiel werden insbesondere Thyristoren verwendet, die nach dem Zünden die Erregerwicklung direkt brücken. Der Wechselstrom in der Erregerwicklung führt dazu, dass diese nach einer Halbwelle wieder verlöschen. Die antiparallel geschalteten Bauelemente müssen demnach wechselseitig aktiviert werden, um einen Wechselstrom zu führen. Der Einsatz von Thyristoren ist vorteilhaft, da diese aufgrund der Ausführung als sog. "Presspack" gut mit der Fliehkraftbeanspruchung im Rotor zurechtkommen. Zum Auslösen des Schalters bzw. zum Zünden der leistungselektronischen Bauelemente ist Hilfsenergie nötig. Diese wird z.B. direkt aus der in der Erregerwicklung induzierten Spannung gewonnen. Als Thyristoren 6 und 6 können bereits bewährte Typen (T1, T2) aus dem Erregerkreis, mit entsprechender Kühlung verwendet werden, da die Überbrückungsthyristoren exakt denselben Strom wie T1 und T2 führen. Die Brückung soll nun nur bis zum Erreichen einer bestimmten Drehzahl erfolgen. D.h. der oben beschriebene Schaltvorgang muss durch ein zusätzliches Logiksignal gesteuert werden, welches das Schalten ab einer definierten Drehzahlschwelle unterdrückt. Dieses Signal kann einerseits durch eine externe Quelle (Telemetrie o.ä.) gesteuert werden oder andererseits direkt aus den vorhandenen Spannungen/Strömen auf dem Rotor generiert werden. Dies kann z.B. so erfolgen, dass die Zeitabstände des wechselseitigen Schaltens der Schalter gemessen werden. Da die Drehzahl während des Anlaufs zunimmt, der Schlupf des Rotors entsprechend abnimmt, wird die Frequenz des Umschaltens immer kleiner. Die Zeitabstände nehmen zu. Beispielsweise kann nun ein Timer überwachen, ob eine gewisse Mindestzeitdauer zwischen den Umschaltungen überschritten ist. Ist dies der Fall, dann wird das Schalten unterdrückt. Diese rein frequenzabhängige Variante hat den Vorteil, dass - abgesehen von zulässigen Toleranzen der Netzfrequenz - keine mit Unsicherheit behafteten Berechnungsdaten einfließen. Über Brückenkonfiguration/Jumper o.ä. kann dann z.B. die Zuschaltdrehzahl variiert werden.

Durch die Zuschaltbarkeit kann der Vorteil entstehen, dass der Energieumsatz im Widerstand reduziert wird, ohne die Wirkung bzgl. des Drehmoments spürbar zu beeinträchtigen. Dies zieht nach sich, dass der Widerstand für eine bestimmte Wirkung kleiner ausgeführt werden kann, da weniger thermische Kapazität vorgehalten werden muss. Daraus ergeben sich insbesondere direkte Kostenvorteile, aber auch indirekte Vorteile, wie geringere Masse auf dem Rotor, Vorteile bzgl. der Rotordynamik etc.

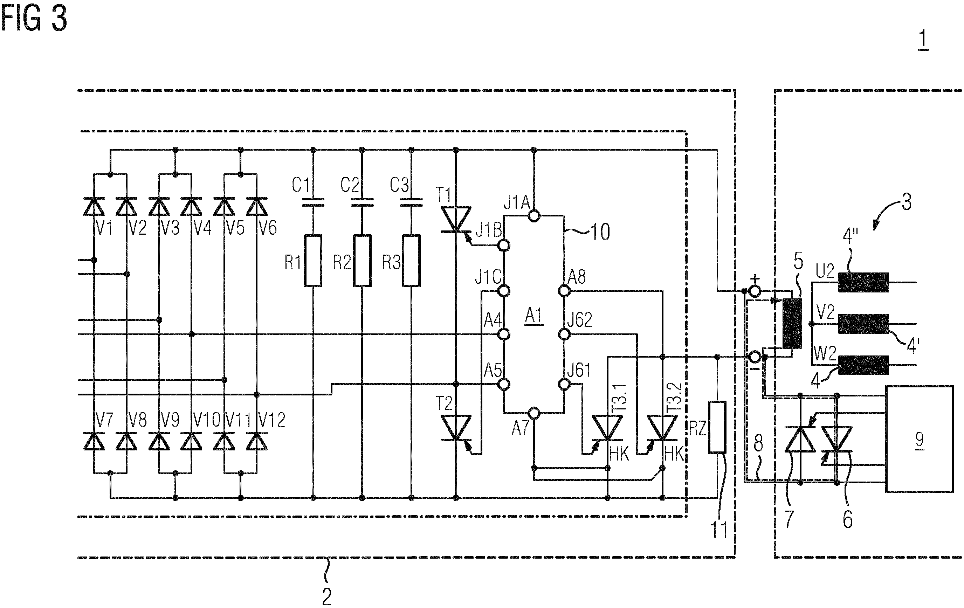

Die Darstellung nach Figur 3 zeigt einen Stromfluss 8 im Fall aktivierter Thyristoren 6 und 7. Der Pfad des Stromflusses 8 zeigt auch eine Masche 8 an. In der Masche 8 befindet sich einer der Leistungshalbleiter 6 zum Kurzschließen und die Erregerwicklung 5, welche zu bestimmten Zeiten kurzzuschließen ist.

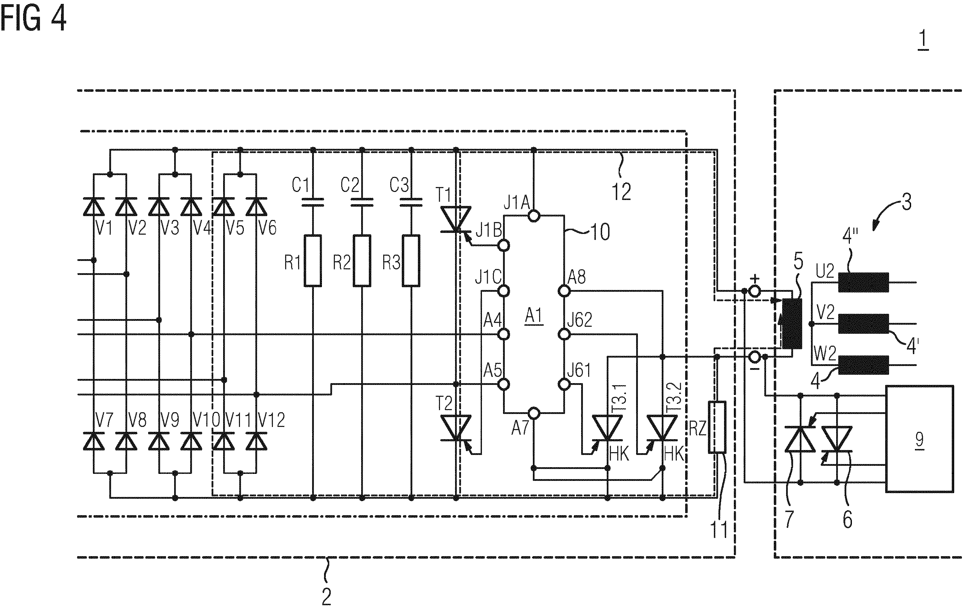

Die Darstellung nach Figur 4 zeigt einen Stromfluss 12 im Fall deaktivierter Thyristoren 6 und 7.

## Patentansprüche

1. Synchronmaschine (1) mit einem Stator (3) und einem Rotor, wobei der Rotor eine Rotorwicklung (5) aufweist, wobei ein erster Leistungshalbleiter (6) zum Kurzschluss der Rotorwicklung (5) vorgesehen ist, wobei der erste Leistungshalbleiter (6) und die Rotorwicklung eine erste Masche (8) ausbilden.

2. Synchronmaschine (1) nach Anspruch 1, wobei ein zweiter Leistungshalbleiter (7) zum Kurzschluss der Rotorwicklung (5) vorgesehen ist, wobei der zweite Leistungshalbleiter (7) parallel zum ersten Leistungshalbleiter (6) verschalten ist.

3. Synchronmaschine (1) nach Anspruch 2, wobei die Leistungshalbleiter (6,7) zum Kurzschluss der Rotorwicklung (5) für unterschiedliche Stromrichtungen in der Rotorwicklung (5) vorgesehen sind.

4. Synchronmaschine (1) nach einem der Ansprüche 1 bis 3, wobei zumindest einer der Leistungshalbleiter (6,7) ansteuerbar ist.

5. Synchronmaschine (1) nach einem der Ansprüche 1 bis 4, wobei der zumindest eine erste Leistungshalbleiter (6) und die Rotorwicklung (5) parallel verschalten sind und dazu ein Anlaufwiderstand (11) seriell verschalten ist.

6. Verfahren zum Betrieb einer Synchronmaschine (1), wobei die zu betreibende Synchronmaschine einen Stator (3) und einen Rotor aufweist, wobei der Rotor eine Rotorwicklung (5) aufweist, wobei die Rotorwicklung (5) in einem Betriebszustand der Synchronmaschine (1) kurzgeschlossen wird, wobei zum Kurzschließen ein erster Kurzschließer (6) verwendet wird, wobei der Kurzschließer (6) und die Rotorwicklung (5) eine erste Masche (8) ausbilden.

7. Verfahren nach Anspruch 6, wobei der Betriebszustand einen Hochlauf und/oder Anlauf der Synchronmaschine (1) betrifft.

8. Verfahren nach Anspruch 6 oder 7, wobei ein Anlaufwiderstand (11) mit einem dazu parallel verschaltenen zweiten Kurzschließer (7) seriell zur Parallelschaltung von erstem Kurzschließer (6) und Rotorwicklung (5) verschalten ist.

9. Verfahren nach einem der Ansprüche 6 bis 8, wobei eine Synchronmaschine nach einem der Ansprüche 1 bis 5 verwendet wird.
